# EUROPÄISCHE PATENTSCHRIFT

(11) **EP 3 676 039 B1**
(45) Veröffentlichungstag und Bekanntmachung des Hinweises auf die Patenterteilung: **24.11.2021**
(21) Anmeldenummer: 18759334.8
(22) Anmeldetag: 31.08.2018
(51) Int. Cl.: B23K 9/095, B23K 9/12, B23K 9/073

(54) **VERFAHREN UND VORRICHTUNG ZUR BEREITSTELLUNG EINES REFERENZIERTEN DISTANZSIGNALS ZUR LAGESTEUERUNG EINES SCHWEISSBRENNERS**
METHOD AND DEVICE FOR PROVIDING A REFERENCED DISTANCE SIGNAL FOR CONTROLLING THE POSITION OF A WELDING TORCH
PROCÉDÉ ET DISPOSITIF DE FOURNITURE D'UN SIGNAL À DISTANCE RÉFÉRENCÉ PERMETTANT LA COMMANDE DE POSITIONNEMENT D'UN CHALUMEAU SOUDEUR

(30) Priorität: 01.09.2017 EP 17189020
(43) Veröffentlichungstag der Anmeldung: 08.07.2020
(73) Patentinhaber: Fronius International GmbH, 4643 Pettenbach (AT)
(72) Erfinder: SÖLLINGER, Dominik, 4643 Pettenbach (AT); HUMMELBRUNNER, Andreas, 4643 Pettenbach (AT); ORTBAUER, Wilhelm, 4643 Pettenbach (AT)
(74) Vertreter: Isarpatent
(86) Internationale Anmeldenummer: PCT/EP2018/073493
(87) Internationale Veröffentlichungsnummer: WO 2019/043168

(56) Entgegenhaltungen:
- EP-A1- 3 160 675
- EP-B1- 1 268 110
- DE-U1-202014 010 776
- US-A1- 2016 125 592

## Beschreibung

Die Erfindung betrifft ein Verfahren und eine Vorrichtung zur Bereitstellung eines referenzierten Distanzsignals zur Lage- bzw. Positionssteuerung eines Schweißbrenners relativ zu einem zu bearbeitenden Werkstück.

Ein herkömmliches Lichtbogen-Schweißgerät besitzt einen Schweißbrenner bzw. einen Schweißkopf, dessen Position geregelt bzw. nachgeführt wird, um eine Schweißnaht an einem zu bearbeitenden Werkstück herzustellen. Dem Schweißbrenner wird eine Schweißdrahtelektrode zugeführt, deren Spitze aus dem Schweißbrenner hervorragt, wobei zwischen der Spitze der Schweißdrahtelektrode und dem zu bearbeitenden Werkstück ein Lichtbogen während des Schweißvorganges entsteht. Während des Schweißvorganges wird die Schweißdrahtelektrode kontinuierlich mit einer Drahtvorschubgeschwindigkeit durch eine Drahtvorschubeinrichtung zugeführt, wobei die Schweißdrahtelektrode an ihrer Spitze während des Schweißvorganges abschmilzt.

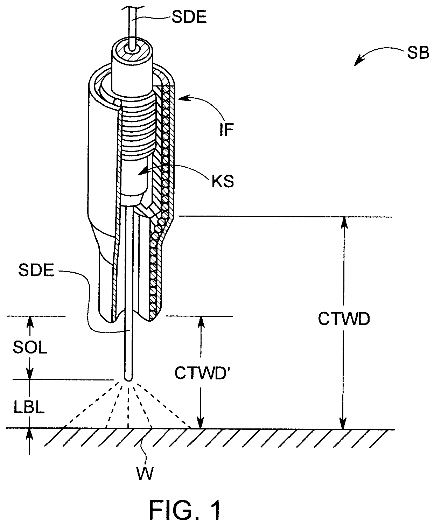

Figur 1 zeigt schematisch ein Beispiel für einen herkömmlichen Schweißbrenner SB mit einem Kontaktrohr KR, das von einer isolierenden Führung IF umgeben ist. Zwischen dem Kontaktrohr bzw. der Kontaktspitze KS des Schweißbrenners SB und dem zu bearbeitenden Werkstück W besteht ein CTWD-Abstand (Contact Tip To Work Distance). Am unteren Ende des Schweißbrenners SB ragt die Schweißdrahtelektrode SDE aus der isolierenden Ummantelung sichtbar mit einer sogenannten Stickout-Länge heraus. Der Abstand zwischen dem unteren Rand des Schweißbrenners SB und dem zu bearbeitenden Werkstück W bildet einen sichtbaren CTWD-Abstand CTWD'. Man erkennt in Figur 1 die Stickout-Länge SOL der Schweißdrahtelektrode SDE sowie eine Lichtbogenlänge LBL eines Lichtbogens LB zwischen der Spitze der hervorragenden Schweißdrahtelektrode SDE und dem zu bearbeitenden Werkstück W. Der sichtbare CTWD-Abstand CTWD' umfasst die Stickout-Länge SOL und der Lichtbogenlänge LBL des Lichtbogens, wie in Figur 1 erkennbar.

Der Schweißbrenner SB ist herkömmlicherweise an einem Roboterarm befestigt, dessen Lage relativ zu dem Werkstück W durch ein sogenanntes Seamtrack-Steuersignal gesteuert bzw. geregelt wird. Bei herkömmlichen Schweißgeräten erfolgt die Referenzierung des Seamtrack-Signals, indem zunächst mit eingestellten Schweißparametern eine Referenzfahrt durchgeführt wird. Bei dieser Referenzfahrt wird der Signalpegel gemessen und als Sollwert für die Höhenregelung des Roboterarmes eingestellt. Ein Nachteil der herkömmlichen Vorgehensweise besteht darin, dass bei einer Änderung der Schweißkennlinie die Referenzfahrt zur Referenzierung des Seamtrack-Signals erneut durchgeführt werden muss. Darüber hinaus kann es bei der herkömmlichen Vorgehensweise zu Fehlern kommen, weil beispielsweise das Werkstück falsch eingespannt ist.

DE 20 2014 010 776 U1 beschreibt ein Verfahren zum Auftragsschweißen, wobei ein tatsächlicher CTWD-Abstand aus dem Schweißstrom und dem Drahtvorschub (WFS) anhand eines Lookup-Tables fortlaufend ermittelt wird und ein Mittelwert aus den tatsächlichen CTWD-Abständen gebildet wird. Aus diesem CTWD-Mittelwert kann eine Dicke bzw. Höhe der gebildeten Materiallage ermittelt werden. Aus einem Vergleich dieser Dicke mit einem in Form von Roboterparametern vorliegenden 3D-Modells des herzustellenden Werkstücks kann ein Höhenfehler, also eine Abweichung der tatsächlichen Ist-Schichtdicke von einer Soll-Schichtdicke ermittelt werden. Um diesen Höhenfehler auszugleichen, wird die Schweißdauer und/oder der Drahtvorschub bei der Ausbildung der nächsten Lage angepasst.

Es ist eine Aufgabe der vorliegenden Erfindung, ein Verfahren und eine Vorrichtung zum Bereitstellen eines referenzierten Distanzsignals zu schaffen, welches als Seamtrack-Signal verwendet werden kann und selbst bei Änderung einer Schweißkennlinie oder sonstigen Korrekturen keine weitere Referenzfahrt des Schweißbrenners erfordert.

Diese Aufgabe wird erfindungsgemäß durch ein Verfahren nach Anspruch 1, eine Vorrichtung nach Anspruch 7 und ein Schweißgerät nach Anspruch 11 gelöst.

Die Erfindung schafft gemäß einem ersten Aspekt ein Verfahren zum Bereitstellen eines referenzierten Distanzsignals, das dem Abstand zwischen einer Kontaktspitze eines Schweißbrenners und einem zu bearbeitenden Werkstück entspricht, mit den Schritten:
Einstellen eines Arbeitspunktes auf einer vorgegebenen Schweißkennlinie, die zumindest durch eine Drahtvorschubgeschwindigkeit, eine Schweißspannung und einen Schweißstrom definiert ist, und eines CTWD-Abstandes zwischen einer Kontaktspitze des Schweißbrenners und dem zu bearbeitenden Werkstück,
Auslesen oder Ermitteln eines Parameter-Sollwertes mindestens eines von dem CTWD-Abstand abhängigen Parameters für den auf der Schweißkennlinie eingestellten Arbeitspunkt,
Ermitteln eines Parameter-Istwertes des von dem CTWD-Abstand abhängigen Parameters durch Messung von mindestens einem der aktuellen Schweißparameter Drahtvorschubgeschwindigkeit, Schweißspannung oder Schweißstrom,
Anpassen des ermittelten Parameter-Istwertes in Abhängigkeit einer Abweichung zwischen dem Parameter-Sollwert und einem Referenzwert des Parameters, der in der Mitte eines Ausgabewertebereichs des referenzierten Distanzsignales liegt und Ausgeben des referenzierten Distanzsignals, das dem angepassten Parameter-Istwert entspricht, als Seamtrack-Signal an eine Roboter-Steuereinheit während eines Schweißvorganges zur Regelung einer Position des an einen Roboterarm gekoppelten Schweißbrenners, wobei die Position des Schweißbrenners mittels des Roboterarms derart angepasst wird, dass sich der Ausgabewert des referenzierten Distanzsignales auf den vorgegebenen Referenzwert ändert, um einen gewünschten CTWD-Abstand einzuhalten.

Bei einer möglichen Ausführungsform des erfindungsgemäßen Verfahrens weist der von dem CTWD-Abstand abhängige Parameter die Schweißspannung, dem Schweißstrom und/oder die Drahtvorschubgeschwindigkeit der Schweißdrahtelektrode auf.

Bei einer weiteren möglichen Ausführungsform des erfindungsgemäßen Verfahrens weist der von dem CTWD-Abstand abhängige Parameter eine von der Schweißspannung, dem Schweißstrom und/oder der Drahtvorschubgeschwindigkeit abgeleitete Größe auf.

Bei einer möglichen Ausführungsform des erfindungsgemäßen Verfahrens handelt es sich bei dem von dem CTWD-Abstand abhängigen Parameter um einen Widerstand, welcher eine von der Schweißspannung und dem Schweißstrom abgeleitete Größe darstellt.

Bei einer weiteren möglichen Ausführungsform des erfindungsgemäßen Verfahrens ist der von dem CTWD-Abstand abhängige Parameter die elektrische Leistung, welche eine von der Schweißspannung und dem Schweißstrom abgeleitete Größe darstellt.

Bei einer möglichen Ausführungsform des erfindungsgemäßen Verfahrens wird der ermittelte Parameter-Istwert angepasst, indem die Abweichung zwischen dem Parameter-Sollwert und einem Referenzwert auf den ermittelten Parameter-Istwert als Offsetwert aufaddiert wird.

Bei einer weiteren möglichen alternativen Ausführungsform des erfindungsgemäßen Verfahrens wird der ermittelte Parameter-Istwert angepasst, indem er mit einem Korrekturfaktor multipliziert wird, der in Abhängigkeit von der Abweichung zwischen dem Parameter-Sollwert und dem Referenzwert ermittelt wird.

Bei einer weiteren möglichen Ausführungsform des erfindungsgemäßen Verfahrens werden die Schweißspannung und der Schweißstrom mittels Sensoren gemessen, die an dem Schweißbrenner und/oder einer mit dem Schweißbrenner verbundenen Schweißstromquelle vorgesehen sind.

Die Erfindung schafft ferner gemäß einem weiteren Aspekt eine Vorrichtung zur Bereitstellung eines referenzierten Distanzsignals mit den in Patentanspruch 7 angegebenen Merkmalen.

Die Erfindung schafft demnach eine Vorrichtung zur Bereitstellung eines referenzierten Distanzsignals, das den Abstand zwischen einer Kontaktspitze eines Schweißbrenners und einem zu bearbeitenden Werkstück entspricht, mit:
einer Einstelleinheit zur Einstellung eines Arbeitspunktes auf einer gespeicherten Schweißkennlinie, die zumindest durch eine Drahtvorschubgeschwindigkeit, eine Schweißspannung und durch einen Schweißstrom definiert ist, und zur Einstellung eines CTWD-Abstandes zwischen der Kontaktspitze des Schweißbrenners und dem zu bearbeitenden Werkstück,
einer Sollwert-Ermittlungseinheit zur Ermittlung eines Parameter-Sollwertes mindestens eines von dem CTWD-Abstand abhängigen Parameters für den auf der Schweißkennlinie eingestellten Arbeitspunkt,
einer Istwert-Ermittlungseinheit zur Ermittlung eines Parameter-Istwertes des von dem CTWD-Abstand abhängigen Parameters, wobei die Istwert-Ermittlungseinheit Sensoren aufweist, die dazu eingerichtet sind, zumindest die Drahtvorschubgeschwindigkeit, die Schweißspannung und/oder den Schweißstrom zu messen bzw. sensorisch zu erfassen,
einer Anpasseinheit zur automatisierten Anpassung des ermittelten Parameter-Istwertes in Abhängigkeit einer berechneten Abweichung zwischen dem ermittelten Parameter-Sollwert und einem vorgegebenen Referenzwert des Parameters, der in der Mitte eines Ausgabewertebereichs des referenzierten Distanzsignals liegt, und
einer Ausgabeeinheit zur Ausgabe eines referenzierten Distanzsignals, das dem durch die Anpasseinheit angepassten Parameter-Istwert entspricht, wobei die Ausgabeschnittstelle zur Übertragung des referenzierten Distanzsignals als Seamtrack-Signal an eine Robotersteuereinheit vorgesehen ist, welche dazu eingerichtet ist, eine Position des an einen Roboterarm gekoppelten Schweißbrenners während des Schweißvorganges in Abhängigkeit des empfangenen Seamtrack-Signals zu steuern, wobei die Position des Schweißbrenners mittels des Roboterarms derart angepassbar ist, dass sich der Ausgabewert des referenzierten Distanzsignals auf den vorgegebenen Referenzwert ändert, um einen gewünschten CTWD-Abstand einzuhalten.

Bei einer möglichen Ausführungsform der erfindungsgemäßen Vorrichtung weist die Ausgabeeinheit eine Schnittstelle zur Übertragung des referenzierten Distanzsignals als Seamtrack-Signal an eine Steuereinheit auf, welche eine Position des Schweißbrenners während des Schweißvorganges in Abhängigkeit des Seamtrack-Signals steuert.

Bei einer weiteren möglichen Ausführungsform der erfindungsgemäßen Vorrichtung passt die Anpasseinheit den ermittelten Parameter-Istwert an, indem sie eine berechnete Abweichung zwischen dem von der Sollwert-Ermittlungseinheit ermittelten Parameter-Sollwert und einem Referenzwert auf den durch die Istwert-Ermittlungseinheit ermittelten Parameter-Istwert als Offsetwert aufaddiert.

Bei einer weiteren möglichen alternativen Ausführungsform der erfindungsgemäßen Vorrichtung passt die Anpasseinheit den ermittelten Parameter-Istwert an, indem sie den Parameter-Istwert mit einem Korrekturfaktor multipliziert, der in Abhängigkeit von einer berechneten Abweichung zwischen dem von der Sollwert-Ermittlungseinheit ermittelten Parameter-Sollwert und einem Referenzwert ermittelt wird.

Bei einer weiteren möglichen Ausführungsform der erfindungsgemäßen Vorrichtung sind die Sensoren an dem Schweißbrenner selbst oder einer mit dem Schweißbrenner verbundenen Schweißstromquelle vorgesehen.

Die Erfindung schafft ferner gemäß einem weiteren Aspekt ein Schweißgerät mit den in Patentanspruch 11 angegebenen Merkmalen.

Die Erfindung schafft demnach ein Schweißgerät mit einer Steuereinheit, die eine Position des Schweißbrenners während des Schweißvorganges in Abhängigkeit eines referenzierten Distanzsignals steuert,
wobei das Distanzsignal von einer Vorrichtung gemäß dem zweiten Aspekt der Erfindung bereitgestellt wird.

Erfindungsgemäß wird der Schweißbrenner durch einen Roboterarm bewegt, dessen Lage relativ zu dem zu bearbeitenden Werkstück automatisch in Abhängigkeit des referenzierten Distanzsignals durch die Steuereinheit des Schweißgerätes geregelt wird.

Im Weiteren werden mögliche Ausführungsformen des erfindungsgemäßen Verfahrens und der erfindungsgemäßen Vorrichtung zur Bereitstellung eines referenzierten Distanzsignals unter Bezugnahme auf die beigefügten Figuren näher erläutert.

Es zeigen:
- Figur 1: eine schematische Darstellung eines Schweißbrenners mit einem CTWD-Abstand zu einem zu bearbeitenden Werkstück;
- Figur 2: ein Blockschaltbild zur Darstellung einer möglichen exemplarischen Ausführungsform einer erfindungsgemäßen Vorrichtung zur Bereitstellung eines referenzierten Distanzsignals bei einem Schweißgerät;
- Figur 3: ein Diagramm zur Darstellung eines exemplarischen Ausführungsbeispiels eines erfindungsgemäßen Schweißgerätes, welches die erfindungsgemäße Vorrichtung zur Bereitstellung eines referenzierten Distanzsignals beinhaltet;
- Figur 4: ein Ablaufdiagramm zur Darstellung eines Ausführungsbeispiels eines erfindungsgemäßen Verfahrens zum Bereitstellen eines referenzierten Distanzsignals;
- Figuren 5 bis 8: Beispiele für Schweißkennlinien, welche bei einem erfindungsgemäßen Schweißgerät verwendet werden können.

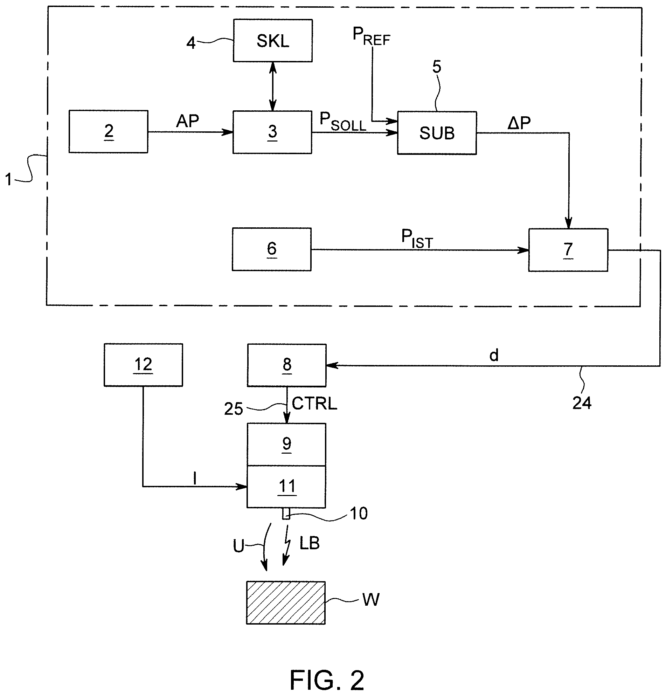

Wie aus Figur 2 ersichtlich, weist eine erfindungsgemäße Vorrichtung 1 zur Bereitstellung eines referenzierten Distanzsignals d bei dem dargestellten Ausführungsbeispiel mehrere Komponenten bzw. Einheiten auf. Die Vorrichtung 1 umfasst bei dem dargestellten Ausführungsbeispiel eine Einstelleinheit 2, die zur Einstellung eines Arbeitspunktes AP auf einer gespeicherten Schweißkennlinie SKL dient. Die gespeicherte Schweißkennlinie SKL ist zumindest durch eine Drahtvorschubgeschwindigkeit V_{D} einer Schweißdrahtelektrode SDE, durch eine Schweißspannung U und durch einen Schweißstrom I definiert. Die Einstelleinheit 2 der Vorrichtung 1 dient weiter zur Einstellung eines CTWD-Abstandes zwischen einer Kontaktspitze des Schweißbrenners 11 und dem zu bearbeitenden Werkstück W.

Die Vorrichtung 1 umfasst ferner eine Sollwert-Ermittlungseinheit 3. Die Sollwert-Ermittlungseinheit 3 ermittelt einen Parameter-Sollwert P_{Soll} mindestens eines von dem eingestellten CTWD-Abstand abhängigen Parameters P für den auf der Schweißkennlinie SKL eingestellten Arbeitspunkt AP. Die Schweißkennlinien SKL sind vorzugsweise in einer Speichereinheit 4 abgelegt, auf die die Sollwert-Ermittlungseinheit 3 Zugriff hat. Bei dem von dem CTWD-Abstand abhängigen Parameter P kann es sich beispielsweise um einen Schweißwiderstand R handeln. Weiterhin kann es sich bei dem von dem CTWD-Abstand abhängigen Schweißparameter P um die Schweißspannung U, den Schweißstrom I oder die Drahtvorschubgeschwindigkeit V_{D} oder eine sonstige daraus abgeleitete Größe, wie beispielsweise die elektrische Schweißleistung, handeln. Die Schweißkennlinie SKL ist für einen bestimmten CTWD-Abstand erstellt worden und wird vorzugsweise in einem Schweißkennlinienspeicher 4 abgelegt. Der Nutzer kann auch diesen CTWD-Wert mithilfe der Einstelleinheit 2 einstellen. Der Nutzer kann einen CTWD-Wert einstellen, jedoch wird in diesem Fall eine Umrechnung der Referenzwerte erfolgen oder der Kunde regelt auf einen ihm bekannten Wert (Kalibrierfahrt mit neuem CTWD-Abstand).

Eine Subtrahiereinheit 5 (SUB) errechnet eine Abweichung bzw. eine Differenz zwischen dem Parameter-Sollwert P_{Soll} und einem Referenzwert des Parameters P_{ref}, wie in Figur 2 dargestellt.

Die Vorrichtung 1 enthält ferner eine Istwert-Ermittlungseinheit 6 zur Ermittlung eines Parameter-Istwertes P_{Ist} des betreffenden Parameters P, welcher von dem CTWD-Abstand abhängig ist. Dieser erfolgt vorzugsweise durch Messung von zumindest einem der aktuellen Schweißparameter, nämlich der Drahtvorschubgeschwindigkeit V_{D}, der Schweißspannung U oder dem Schweißstrom I. Der ermittelte Parameter-Istwert P_{Ist} wird einer Anpasseinheit 7 der Vorrichtung 1 zugeführt, wie in Figur 2 dargestellt. Die Anpasseinheit 7 passt den ermittelten Parameter-Istwert P_{Ist} an, in Abhängigkeit von der errechneten Parameter-Abweichung ΔP zwischen dem ermittelten Parameter-Sollwert P_{Soll} und dem vorgegebenen Referenzwert P_{ref}. Bei einer möglichen Implementierung passt die Anpasseinheit 7 den ermittelten Parameter-Istwert P_{Ist} an, indem sie eine berechnete Abweichung ΔP zwischen dem von der Sollwert-Ermittlungseinheit 3 ermittelten Parameter-Sollwert P_{Soll} und dem Referenzwert P_{ref} auf den durch die Istwert-Ermittlungseinheit 6 ermittelten Parameter-Istwert P_{Ist} als Offsetwert aufaddiert. Bei einer möglichen Ausführungsform handelt es sich bei dem betreffenden Parameter P um einen Schweißwiderstand R. Der Schweißwiderstand R stellt eine Größe dar, die von der Schweißspannung U und dem Schweißstrom I abhängt (R = U/I). Bei dieser Ausführungsform wird somit der ermittelte Istwert des Widerstandes R_{Ist} angepasst, indem die Abweichung ΔR zwischen dem Soll-Widerstand und einem Referenz-Widerstand auf den ermittelten Ist-Widerstand R_{Ist} als Offsetwert aufaddiert wird.

Bei einer alternativen Ausführungsform der erfindungsgemäßen Vorrichtung 1 passt die Anpasseinheit 7 den ermittelten Parameter-Istwert P_{Ist} an, indem sie den Parameter-Istwert P_{Ist} mit einem Korrekturfaktor KF multipliziert. Dieser Korrekturfaktor KF wird vorzugsweise in Abhängigkeit von einer berechneten Abweichung ΔP zwischen dem von der Sollwert-Ermittlungseinheit 3 ermittelten Parameter-Sollwert P_{Soll} und einem Referenzwert P_{ref} ermittelt. Bei einer möglichen Ausführungsform ist der betreffende Parameter der Schweißwiderstand R. Bei dieser Ausführungsform wird der ermittelte Ist-Widerstand R_{Ist} bzw. momentan gemessene Widerstand R, der sich aus der Schweißspannung U und dem Schweißstrom I ergibt, angepasst, indem er mit einem Korrekturfaktor KF multipliziert wird, der in Abhängigkeit von der Abweichung ΔR zwischen dem Soll-Widerstandswert R_{Soll} und dem Referenz-Widerstandswert R_{ref} ermittelt wird.

Die Vorrichtung 1 besitzt eine Ausgabeeinheit zur Ausgabe des referenzierten Distanzsignals d, welches dem durch die Anpasseinheit 7 angepassten Parameter-Istwert P_{Ist} entspricht, wie in Figur 2 dargestellt. Die Istwert-Ermittlungseinheit 6 der Vorrichtung 1 weist bei einer möglichen Ausführungsform Sensoren auf, die Parameter-Istwerte P_{Ist} von Parametern P sensorisch erfassen, welche von dem CTWD-Abstand abhängig sind. Diese Parameter P sind bei einer möglichen Ausführungsform die Schweißspannung U, der Schweißstrom I und/oder die Drahtvorschubgeschwindigkeit VD für die Schweißdrahtelektrode 10. Die Sensoren der Istwert-Ermittlungseinheit 6 sind bei einer möglichen Ausführungsform an dem Schweißbrenner 11 des Schweißgerätes und/oder an einer mit dem Schweißbrenner 11 verbundenen Schweißstromquelle 12 des Schweißgerätes vorgesehen.

Die Vorrichtung 1 überträgt das referenzierte Distanzsignal d bei einer möglichen Ausführungsform an eine Robotersteuereinheit 8. Bei einer möglichen Ausführungsform steuert die Robotersteuereinrichtung 8 die Position bzw. Lage eines Roboterarmes 9, welcher den Schweißbrenner 11 des Schweißgerätes SG hält bzw. trägt. Der Schweißbrenner 11 ist mit einer Schweißstromquelle 12 verbunden, die ihn mit einem Schweißstrom I versorgt. Wie in Figur 2 schematisch dargestellt, ragt aus dem Schweißbrenner 11 die zugeführte Schweißdrahtelektrode 10 heraus, wobei sich zwischen Schweißdrahtelektrode 10 und dem zu bearbeitenden Werkstück W ein Lichtbogen LB während des Schweißvorganges bildet.

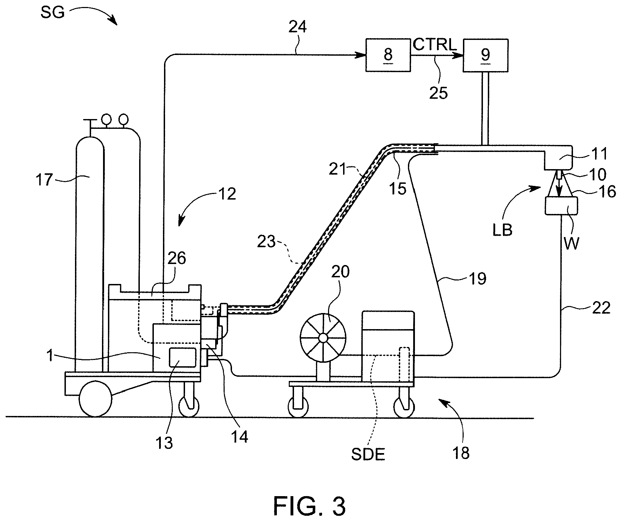

Figur 3 zeigt ein Ausführungsbeispiel eines Schweißgerätes SG, welches eine Vorrichtung 1 zur Bereitstellung eines referenzierten Distanzsignals d beinhalten kann. Figur 3 zeigt schematisch eine Schweißanlage bzw. ein Schweißgerät SG, welches sich zur Durchführung verschiedener Schweißverfahren eignet, insbesondere MIG/MAG-Lichtbogenschweißen. Das Schweißgerät SG verfügt über eine Schweißstromquelle 12 mit einem Leistungsteil 13. Eine Steuereinheit der Schweißstromquelle 12 kann bei einer möglichen Ausführungsform ein Steuerventil 14 ansteuern, welches in einer Versorgungsleitung 15 für ein Schutzgas 16 angeordnet ist. Bei dem Schutzgas 16 kann es sich beispielsweise um Kohlendioxid, Helium oder Argon handeln, das in einem Schutzgasspeicher 17 des Schweißgerätes SG gespeichert ist. Eine Steuereinheit der Schweißstromquelle 12 steuert ferner ein Drahtvorschubgerät 18 an. Über eine Drahtführungsleitung 19 wird ein Schweißdraht bzw. eine Schweißdrahtelektrode 10 von einer Vorratstrommel 20 zugeführt.

Ein elektrischer Strom I zum Aufbauen eines Lichtbogens LB zwischen der Schweißdrahtelektrode 10 und dem Werkstück W kann über eine Schweißleitung 21 von dem Leistungsteil der Schweißstromquelle 12 dem Schweißbrenner 11 bzw. dem darin geführten Schweißdraht 10 zugeführt werden. Das zu verschweißende bzw. zu bearbeitende Werkstück W kann über eine weitere Schweißleitung 22 ebenfalls mit dem Schweißgerät SG, insbesondere mit dessen Schweißstromquelle 12, verbunden sein, sodass über den Lichtbogen LB ein Stromkreis geschlossen werden kann. Zum Kühlen des Schweißbrenners 11 kann ferner ein Kühlkreislauf 23 vorgesehen sein.

Bei dem in Figur 3 dargestellten Ausführungsbeispiel befindet sich die Vorrichtung 1 innerhalb eines Gehäuses einer Schweißstromquelle 12 eines Schweißgeräts SG und liefert über eine Leitung 24 einer Robotersteuereinheit 8 das referenzierte Distanzsignal bzw. Seamtrack-Signal d. Die Robotersteuereinheit 8 steuert eine Position bzw. Höhenlage eines Roboterarms 9, welcher den Schweißbrenner 11 trägt bzw. hält, in Abhängigkeit des Seamtrack-Signals d mittels eines Steuersignals CTRL über die Steuerleitung 25.

Bei einer möglichen Ausführungsform befindet sich die erfindungsgemäße Vorrichtung 1 zur Bereitstellung eines referenzierten Distanzsignals d in dem Gehäuse der Schweißstromquelle 12, wie in Figur 3 angedeutet. Das bereitgestellte referenzierte Distanzsignal d entspricht dem Abstand zwischen einer Kontaktspitze des Schweißbrenners 11 und dem zu bearbeitenden Werkstück W. Die Robotersteuereinheit 8 steuert über die Steuerleitung 25 den Roboterarm 9 in Abhängigkeit von dem über die Leitung 24 empfangenen Seamtrack-Signal, welches dem referenzierten Distanzsignal d entspricht. Der Roboterarm 9 ist mechanisch an den Schweißbrenner 11 gekoppelt, wie in Figur 3 dargestellt.

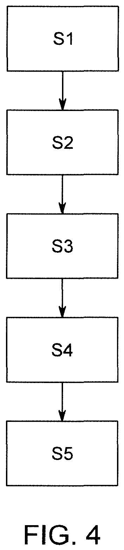

Die Schweißstromquelle 12 besitzt eine Nutzerschnittstelle. Bei einer möglichen Ausführungsform ist die Einstelleinheit 2 der erfindungsgemäßen Vorrichtung 1 in einer Nutzerschnittstelle 26 der Schweißstromquelle 12 integriert. Über die Nutzerschnittstelle 26 hat ein Nutzer bzw. Schweißer die Möglichkeit, einen Arbeitspunkt AP auf einer gespeicherten Schweißkennlinie SKL einzustellen. Die Auswahl des Arbeitspunktes AP kann über verschiedene Parameter P erfolgen, insbesondere die Drahtvorschubgeschwindigkeit V_{D} der Schweißdrahtelektrode 10, eine Schweißspannung U zwischen der Spitze der Schweißdrahtelektrode SDE und dem zu verarbeitenden Werkstück W und einen dem Schweißbrenner 11 zugeleiteten Schweißstrom I. Weitere mögliche Parameter P zur Auswahl des Arbeitspunktes AP beinhalten eine Materialstärke, eine Schweißleistung, eine Nahtform der Schweißnaht, ein sogenanntes A-Maß, eine Wärmeeinbringung, eine Schweißgeschwindigkeit usw. Figur 4 zeigt ein Ablaufdiagramm eines Ausführungsbeispiels eines erfindungsgemäßen Verfahrens zur Bereitstellung eines referenzierten Distanzsignals d.

In einem ersten Schritt S1 wird ein Arbeitspunkt AP auf einer vorgegebenen Schweißkennlinie SKL eingestellt. Dies geschieht beispielsweise durch einen Schweißer bzw. Nutzer mithilfe einer Nutzerschnittstelle 26 der Schweißstromquelle 12. Die Schweißkennlinien SKL sind vorzugsweise in einem internen Speicher 4 der Vorrichtung 1 abgelegt.

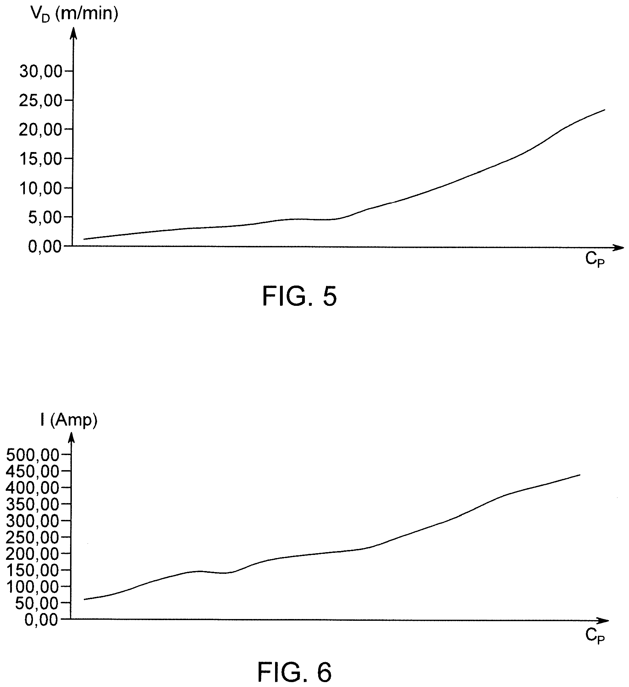

Die Figuren 5, 6, 7, 8 zeigen verschiedene Schweißstromkennlinien SKL, wie sie in einem Speicher 4 der Vorrichtung 1 gespeichert sein können.

Figur 5 zeigt eine Drahtvorschubgeschwindigkeit V_{D} in Meter pro Minute für verschiedene charakteristische Punkte CP.

Figur 6 zeigt einen Schweißstrom I in Ampere für verschiedene charakteristische Punkte CP.

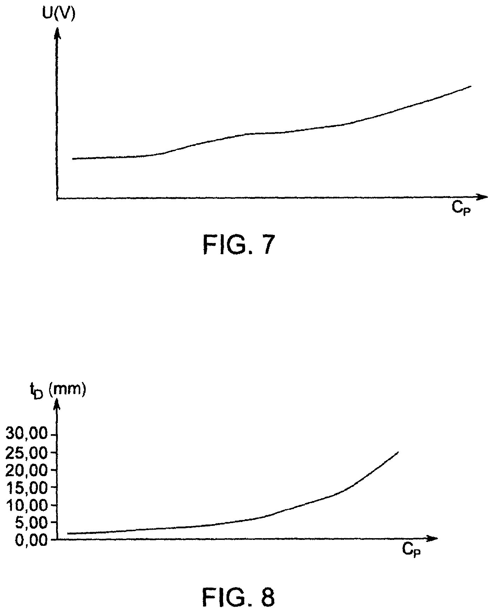

Figur 7 zeigt eine Schweißspannung U in Volt für verschiedene charakteristische Punkte CP.

Figur 8 zeigt eine Materialdicke in Millimeter für verschiedene charakteristische Punkte CP.

In einem weiteren Schritt S2 wird ein Parameter-Sollwert P_{Soll} für mindestens einen von dem CTWD-Abstand abhängigen Parameter P für den auf der Schweißkennlinie SKL eingestellten Arbeitspunkt AP ausgelesen oder ermittelt. Dies geschieht bei einer möglichen Ausführungsform mittels der in dem Datenspeieher 4 abgelegten Schweißkennlinien SKL, wie sie beispielsweise in den Figuren 5 bis 8 dargestellt sind.

In einem weiteren Schritt S3 wird ein Parameter-Istwert P_{Ist} des von dem CTWD-Abstand abhängigen Parameters P durch Messung von zumindest einem der aktuellen Schweißparameter ermittelt. Diese Schweißparameter umfassen insbesondere die Drahtvorschubgeschwindigkeit V_{D} der Schweißdrahtelektrode SDE, die eingestellte bzw. aktuelle Schweißspannung U sowie den aktuell fließenden Schweißstrom I. Bei einer möglichen Ausführungsform werden einige oder alle der Schweißparameter P mithilfe von Sensoren erfasst, um den Parameter-Istwert P_{Ist} des betreffenden Parameters P zu ermitteln.

In einem weiteren Schritt S4 wird der ermittelte Parameter-Istwert P_{Ist} in Abhängigkeit einer Abweichung zwischen dem Parameter-Sollwert P_{Soll} und einem Referenzwert automatisch angepasst bzw. kontinuierlich adaptiert.

In einem weiteren Schritt S5 wird das referenzierte Distanzsignal d, welches dem im Schritt S4 angepassten Istwert P_{Ist}' des Parameters entspricht, ausgegeben. Das referenzierte Distanzsignal d wird dabei bei einer möglichen Ausführungsform an eine Robotersteuereinheit 8 über eine entsprechende Schnittstelle ausgegeben. Das referenzierte Distanzsignal d wird als Seamtrack-Steuersignal für den Roboterarm 9 an die Robotersteuereinheit 8 zur Regelung einer Position bzw. Lage des Schweißbrenners 11 während des Schweißvorganges ausgegeben.

Um eine mögliche exemplarische Ausführungsform des erfindungsgemäßen Verfahrens an einem einfachen Beispiel zu verdeutlichen sei für den Widerstand R als CTWD abhängigen Parameter P angenommen, dass das referenzierte Distanzsignal d einen Ausgabewertebereich von 0 bis 500mΩ aufweist. Um Distanzabweichungen sowohl nach oben als auch nach unten darstellen zu können, wird beispielsweise der Referenzwert des Widerstands P_{ref} als Mitte des Ausgabebereichs, also auf 250mΩ, festgelegt. Für einen aktuellen Arbeitspunkt AP auf der in der Speichereinheit 4 hinterlegten und für den Schweißvorgang ausgewählten Schweißkennlinie SKL wird der Widerstands-Sollwert Pₛₒₗₗ mit beispielsweise 70mΩ berechnet. Die durch die Substrahiereinheit 5 berechnete Differenz ΔP zwischen dem Referenzwert P_{ref} und dem Widerstandssollwert P_{Soll} beträgt in diesem Falle 180mΩ und wird durch die Anpasseinheit 7 bei einer möglichen Ausführungsform auf den aus den aktuellen Messwerten berechneten Widerstands-Istwert Rᵢₛₜ, der beispielsweise 60mΩ beträgt, aufaddiert. Für das referenzierte Distanzsignal d ergibt sich somit ein Ausgabewert von 240mΩ. Mittels des Roboterarms 9 kann nun die Position des Schweißbrenners 11 derart angepasst werden, dass sich der Ausgabewert des referenzierte Distanzsignals d auf den Referenzwert P_{ref} ändert, um den gewünschten CTWD Abstand einzuhalten.

### BEZUGSZEICHEN

- 1: Vorrichtung zur Bereitstellung eines referenzierten Distanzsignals
- 2: Einstelleinheit
- 3: Sollwert-Ermittlungseinheit
- 4: Speichereinheit
- 5: Substrahiereinheit (SUB)
- 6: Istwert-Ermittlungseinheit
- 7: Anpasseinheit
- 8: Robotersteuereinheit
- 9: Roboterarm
- 10: Schweißdrahtelektrode (SDE)
- 11: Schweißbrenner
- 12: Schweißstromquelle
- 13: Leistungsteil
- 14: Steuerventil
- 15: Versorgungsleitung
- 16: Schutzgas
- 17: Schutzgasspeicher
- 18: Drahtvorschubgerät
- 19: Drahtführungsleitung
- 20: Vorratstrommel
- 21: Schweißleitung
- 22: Schweißleitung
- 23: Kühlkreislauf
- 24: Leitung
- 25: Steuerleitung

## Patentansprüche

1. Verfahren zum Bereitstellen eines referenzierten Distanzsignals (d) das dem Abstand zwischen einer Kontaktspitze (KS) eines Schweißbrenners (11) und einem zu bearbeitenden Werkstück (W) entspricht,
mit den Schritten:
(a) Einstellen (S1) eines Arbeitspunktes (AP) auf einer vorgegebenen Schweißkennlinie (SKL), die zumindest durch eine Drahtvorschubgeschwindigkeit (V_{D}) eine Schweißspannung (U) und/oder einen Schweißstrom (I) definiert ist, und eines CTWD-Abstandes zwischen der Kontaktspitze (KS) des Schweißbrenners (11) und dem zu bearbeitenden Werkstück (W);
(b) Auslesen oder Ermitteln (S2) eines Parameter-Sollwertes (P_{Soll}) eines von dem CTWD-Abstand abhängigen Parameters (P) für den eingestellten Arbeitspunkt (AP) auf der Schweißkennlinie (SKL);
(c) Ermitteln (S3) eines Parameter-Istwertes (P_{Ist}) des von dem CTWD-Abstand abhängigen Parameters (P) durch Messung von zumindest einem der aktuellen Schweißparameter Drahtvorschubgeschwindigkeit (V_{D}), Schweißspannung (U) oder Schweißstrom (I);
(d) Anpassen (S4) des ermittelten Parameter-Istwertes (P_{Ist}) in Abhängigkeit einer berechneten Abweichung (ΔP) zwischen dem Parameter-Sollwert (P_{Soll}) und einem vorgegebenen Referenzwert (P_{ref}) des Parameters (P), der in der Mitte eines Ausgabewertebereichs des referenzierten Distanzsignales (d) liegt; und
(e) Ausgeben (S5) des referenzierten Distanzsignals (d), das dem angepassten Parameter-Istwert (P_{Ist'}) entspricht, als Seamtrack-Signal an eine Roboter-Steuereinheit (8) während eines Schweißvorganges zur Regelung einer Position des an einen Roboterarm (9) gekoppelten Schweißbrenners (11), wobei die Position des Schweißbrenners (11) mittels des Roboterarms (9) derart angepasst wird, dass sich der Ausgabewert des referenzierten Distanzsignales (d) auf den vorgegebenen Referenzwert (P_{ref}) ändert, um einen gewünschten CTWD-Abstand einzuhalten.

2. Verfahren nach Anspruch 1,
wobei der von dem CTWD-Abstand abhängige Parameter (P) die Schweißspannung (U), der Schweißstrom (I), die Drahtvorschubgeschwindigkeit (V_{D}) oder eine davon abgeleitete Größe ist.

3. Verfahren nach Anspruch 2,
wobei der von dem CTWD-Abstand abhängige Parameter (P) ein Schweiß-Widerstand (R) oder eine elektrische SchweißLeistung ist.

4. Verfahren nach einem der vorangehenden Ansprüche 1 bis 3,
wobei der ermittelte Parameter-Istwert (P_{Ist}) angepasst wird, indem die berechnete Abweichung, ΔP, zwischen dem Parameter-Sollwert (P_{Soll}) und einem Referenzwert (P_{ref}) auf den ermittelten Parameter-Istwert (P_{Ist}) als Offsetwert aufaddiert wird.

5. Verfahren nach einem der vorangehenden Ansprüche 1 bis 3, wobei der ermittelte Parameter-Istwert (P_{Ist}) angepasst wird, indem er mit einem Korrekturfaktor (KF) multipliziert wird, der in Abhängigkeit von der Abweichung (ΔP) zwischen dem Parameter-Sollwert (P_{Soll}) und dem Referenzwert (P_{ref}) ermittelt wird.

6. Verfahren nach einem der vorangehenden Ansprüche 1 bis 5,
wobei die Schweißspannung (U) und der Schweißstrom (I) mittels Sensoren gemessen werden, die an dem Schweißbrenner (11) oder einer mit dem Schweißbrenner (11) verbundenen Schweißstromquelle (12) vorgesehen sind.

7. Vorrichtung zur Bereitstellung eines referenzierten Distanzsignals (d), das dem Abstand zwischen einer Kontaktspitze (KS) eines Schweißbrenners (11) und einem zu bearbeitenden Werkstück (W) entspricht, mit:
- einer Einstelleinheit (2) zur Einstellung eines Arbeitspunktes (AP) auf einer gespeicherten Schweißkennlinie (SKL), die zumindest durch eine Drahtvorschubgeschwindigkeit (V_{D}), eine Schweißspannung (U) und/oder durch einen Schweißstrom (I) definiert ist, und zur Einstellung eines CTWD-Abstandes zwischen der Kontaktspitze (KS) des Schweißbrenners (11) und dem zu bearbeitenden Werkstück (W);
- einer Sollwert-Ermittlungseinheit (3) zur Ermittlung eines Parameter-Sollwertes (P_{Soll}) eines von dem CTWD-Abstand abhängigen Parameters (P) für den eingestellten Arbeitspunkt (AP) auf der Schweißkennlinie (SKL);
- einer Istwert-Ermittlungseinheit (6) zur Ermittlung eines Parameter-Istwertes (P_{Ist}) des von dem CTWD-Abstand abhängigen Parameters P, wobei die Istwert-Ermittlungseinheit (3) Sensoren aufweist, die dazu eingerichtet sind, zumindest die Drahtvorschubgeschwindigkeit (V_{D}), die Schweißspannung (U) und/oder den Schweißstrom (I) zu messen;
- einer Anpasseinheit (7) zur automatischen Anpassung des ermittelten Parameter-Istwertes (P_{Ist}) in Abhängigkeit einer berechneten Abweichung (ΔP) zwischen dem ermittelten Parameter-Sollwert (P_{Soll}) und einem vorgegebenen Referenzwert (P_{ref}) des Parameters (P), der in der Mitte eines Ausgabewertebereichs des referenzierten Distanzsignals (d) liegt; und mit
- einer Ausgabeschnittstelle zur Ausgabe eines referenzierten Distanzsignals (d), das dem durch die Anpasseinheit (7) angepassten Parameter-Istwert (P_{Ist}) entspricht, wobei die Ausgabeschnittstelle zur Übertragung des referenzierten Distanzsignals (d) als Seamtrack-Signal an eine Robotersteuereinheit (8) vorgesehen ist, welche dazu eingerichtet ist, eine Position des an einen Roboterarm (9) gekoppelten Schweißbrenners (11) während des Schweißvorganges in Abhängigkeit des empfangenen Seamtrack-Signals zu steuern, wobei die Position des Schweißbrenners (11) mittels des Roboterarms (9) derart anpassbar ist, dass sich der Ausgabewert des referenzierten Distanzsignals (d) auf den vorgegebenen Referenzwert (P_{ref}) ändert, um einen gewünschten CTWD-Abstand einzuhalten.

8. Vorrichtung nach Anspruch 7,
wobei die Anpasseinheit (7) den ermittelten Parameter-Istwert (P_{Ist}) anpasst, indem sie die berechnete Abweichung (ΔP) zwischen dem von der Sollwert-Ermittlungseinheit (3) ermittelten Parameter-Sollwert (P_{Soll}) und dem vorgegebenen Referenzwert (P_{ref}) auf den durch die Istwert-Ermittlungseinheit (6) ermittelten Parameter-Istwert (P_{Ist}) als Offsetwert aufaddiert.

9. Vorrichtung nach Anspruch 7,
wobei die Anpasseinheit (7) den ermittelten Parameter-Istwert (P_{Ist}) anpasst, indem sie den Parameter-Istwert, (P_{Ist}) mit einem Korrekturfaktor (KF) multipliziert, der in Abhängigkeit von der berechneten Abweichung (ΔP) zwischen dem von der Sollwert-Ermittlungseinheit (3) ermittelten Parameter-Sollwert (P_{Soll}) und dem vorgegebenen Referenzwert (P_{ref}) ermittelt wird.

10. Vorrichtung nach einem der Ansprüche 7 bis 9, mit einem Schweißbrenner (11) und/oder einer mit dem Schweißbrenner (11) verbundenen Schweißstromquelle (12),
wobei die Sensoren an dem Schweißbrenner (11) und/oder einer mit dem Schweißbrenner (11) verbundenen Schweißstromquelle (12) vorgesehen sind.

11. Schweißgerät (SG) mit einem Roboterarm (9), mit einem Schweißbrenner (11), mit einer Vorrichtung (1) gemäß einem der Ansprüche 7 bis 10, und mit einer an dem Schweißgerät (SG) angeschlossenen Robotersteuereinheit (8), die dazu eingerichtet ist, eine Position des Schweißbrenners (11) während des Schweißvorganges in Abhängigkeit eines referenzierten Distanzsignals (d) zu steuern, das von der Vorrichtung (1) gemäß einem der Ansprüche 7 bis 10 bereitgestellt wird, wobei der Schweißbrenner (11) durch den Roboterarm (9) bewegbar ist, dessen Lage relativ zu dem zu bearbeitenden Werkstück (W) automatisch in Abhängigkeit des referenzierten Distanzsignals (d) durch die Robotersteuereinheit (8) geregelt wird.

## Claims

1. Method for providing a referenced distance signal (d) which corresponds to the distance between a contact tip (KS) of a welding torch (11) and a workpiece (W) to be processed, comprising the steps of:
(a) setting (S1) a working point (AP) on a predetermined welding characteristic (SKL), which is defined at least by a wire feed rate (V_{D}), a welding voltage (U) and/or a welding current (I), and a CTWD between the contact tip (KS) of the welding torch (11) and the workpiece (W) to be processed;
(b) reading out or determining (S2) a target parameter value (P_{Soll}) of a parameter (P), dependent on the CTWD, for the set working point (AP) on the welding characteristic (SKL);
(c) determining (S3) an actual parameter value (P_{Ist}) of the parameter (P) dependent on the CTWD by measuring at least one of the current welding parameters of wire feed rate (V_{D}), welding voltage (U) or welding current (I);
(d) adjusting (S4) the determined actual parameter value (P_{Ist}) as a function of a calculated deviation (ΔP) between the target parameter value (P_{Soll}) and a predetermined reference value (P_{ref}) of the parameter (P), which is in the middle of an output value range of the referenced distance signal (d); and
(e) outputting (S5) the referenced distance signal (d), which corresponds to the adjusted actual parameter value (P_{Ist'}), to a robot control unit (8) as a seam-tracking signal during a welding process to control a position of the welding torch (11) coupled to a robot arm (9), the position of the welding torch (11) being adjusted, by means of the robot arm (9), in such a way that the output value of the referenced distance signal (d) changes to the predetermined reference value (P_{ref}) so as to maintain a desired CTWD.

2. Method according to claim 1,
wherein the parameter (P) dependent on the CTWD is the welding voltage (U), the welding current (I), the wire feed rate (V_{D}) or a variable derived therefrom.

3. Method according to claim 2,
wherein the parameter (P) dependent on the CTWD is a welding resistance (R) or an electrical welding power.

4. Method according to any of preceding claims 1 to 3, wherein the determined actual parameter value (Pist) is adjusted by adding the calculated deviation (ΔP) between the target parameter value (P_{Soll}) and a reference value (P_{ref}) to the determined actual parameter value (P_{Ist}) as an offset value.

5. Method according to any of preceding claims 1 to 3, wherein the determined actual parameter value (Pist) is adjusted by multiplying it by a correction factor (KF), which is determined as a function of the deviation (ΔP) between the target parameter value (P_{Soll}) and the reference value (P_{ref}) .

6. Method according to any of preceding claims 1 to 5, wherein the welding voltage (U) and the welding current (I) are measured by means of sensors, which are provided on the welding torch (11) or on a welding power source (12) connected to the welding torch (11).

7. Device for providing a referenced distance signal (d) which corresponds to the distance between a contact tip (KS) of a welding torch (11) and a workpiece (W) to be processed, comprising:
- a setting unit (2) for setting a working point (AP) on a predetermined welding characteristic (SKL), which is defined at least by a wire feed rate (V_{D}), a welding voltage (U) and/or a welding current (I), and setting a CTWD between the contact tip (KS) of the welding torch (11) and the workpiece (W) to be processed;
- a target value determination unit (3) for determining a target parameter value (P_{Soll}) of a parameter (P), dependent on the CTWD, for the set working point (AP) on the welding characteristic (SKL);
- an actual value determination unit (6) for determining an actual parameter value (P_{Ist}) of the parameter (P) dependent on the CTWD, the actual value determination unit (3) having sensors set up to measure at least the wire feed rate (V_{D}), the welding voltage (U) and/or the welding current (I);
- an adjustment unit (7) for automatically adjusting the determined actual parameter value (Pist) as a function of a calculated deviation (ΔP) between the target parameter value (P_{Soll}) and a predetermined reference value (P_{ref}) of the parameter (P), which is in the middle of an output value range of the referenced distance signal (d); and
- an output interface for outputting a referenced distance signal (d), which corresponds to the actual parameter value (P_{Ist}) adjusted by the adjustment unit (7), the output interface being provided for transmitting the referenced distance signal (d), as a seam-tracking signal, to a robot control unit (8) set up to control a position of the welding torch (11) coupled to a robot arm (9) as a function of the seam-tracking signal during the welding process, the position of the welding torch (11) being adjustable, by means of the robot arm (9), in such a way that the output value of the referenced distance signal (d) changes to the predetermined reference value (P_{ref}) so as to maintain a desired CTWD.

8. Device according to claim 7,
wherein the adjustment unit (7) adjusts the determined actual parameter value (P_{Ist}) by adding the calculated deviation (ΔP) between the target parameter value (P_{Soll}), determined by the target value determination unit (3), and the predetermined reference value (P_{ref}) to the actual parameter value (P_{Ist}), determined by the actual value determination unit (6), as an offset value.

9. Device according to claim 7,
wherein the adjustment unit (7) adjusts the determined actual parameter value (P_{Ist}) by multiplying the actual parameter value (P_{Ist}) by a correction factor (KF), which is determined as a function of the calculated deviation (ΔP) between the target parameter value (P_{Soll}) , determined by the target value determination unit (3), and the predetermined reference value (Pref) .

10. Device according to any of claims 7 to 9, comprising a welding torch (11) and/or a welding power source (12) connected to the welding torch (11),
wherein the sensors are provided on the welding torch (11) and/or on a welding power source (12) connected to the welding torch (11).

11. Welding apparatus (SG) comprising a robot arm (9), comprising a welding torch (11), comprising a device (1) according to any of claims 7 to 10, and comprising a robot control unit (8), which is connected to the welding apparatus (SG) and set up to control a position of the welding torch (11) during the welding process as a function of a referenced distance signal (d) provided by the device (1) according to any of claims 7 to 10, the welding torch (11) being movable by the robot arm (9), the position of which relative to the workpiece (W) to be processed is automatically controlled by the robot control unit (8) as a function of the referenced distance signal (d).

## Revendications

1. Procédé pour fournir un signal de distance référencé (d) correspondant à la distance entre une pointe de contact (KS) d'un chalumeau de soudage (11) et une pièce à usiner (W), comprenant les étapes consistant à :
(a) régler (S1) un point de fonctionnement (AP) sur une courbe caractéristique de soudage (SKL) prédéfinie, qui est définie au moins par une vitesse d'avance de fil (V_{D}), une tension de soudage (U) et/ou un courant de soudage (I), et une distance CTWD entre la pointe de contact (KS) du chalumeau de soudage (11) et la pièce à usiner (W) ;
(b) lire ou déterminer (S2) une valeur de consigne de paramètre (P_{Soll}) d'un paramètre (P) dépendant de la distance CTWD pour le point de fonctionnement réglé (AP) sur la courbe caractéristique de soudage (SKL) ;
(c) déterminer (S3) une valeur réelle de paramètre (P_{Ist}) du paramètre (P) dépendant de la distance CTWD en mesurant au moins l'un des paramètres de soudage actuels parmi la vitesse d'avance de fil (V_{D}), la tension de soudage (U) ou le courant de soudage (I) ;
(d) ajuster (S4) la valeur réelle de paramètre déterminée (P_{Ist}) en fonction d'un écart calculé (ΔP) entre la valeur de consigne de paramètre (P_{Soll}) et une valeur de référence prédéfinie (P_{ref}) du paramètre (P) qui se situe au milieu d'une plage de valeurs de sortie du signal de distance référencé (d) ; et
(e) délivrer (S5) le signal de distance référencé (d) correspondant à la valeur réelle de paramètre ajustée (P_{Ist'}) en tant que signal de suivi de ligne de soudure à une unité de commande de robot (8) pendant une opération de soudage pour réguler une position du chalumeau de soudage (11) couplé à un bras de robot (9), la position du chalumeau de soudage (11) étant ajustée au moyen du bras de robot (9) de telle sorte que la valeur de sortie du signal de distance référencé (d) passe à la valeur de référence prédéfinie (P_{ref}) afin de maintenir une distance CTWD souhaitée.

2. Procédé selon la revendication 1,
dans lequel le paramètre (P) dépendant de la distance CTWD est la tension de soudage (U), le courant de soudage (I), la vitesse d'avance de fil (V_{D}) ou une grandeur dérivée de ceux-ci.

3. Procédé selon la revendication 2,
dans lequel le paramètre (P) dépendant de la distance CTWD est une résistance de soudage (R) ou une puissance électrique de soudage.

4. Procédé selon l'une des revendications précédentes 1 à 3,
dans lequel la valeur réelle de paramètre déterminée (P_{Ist}) est ajustée en additionnant l'écart calculé (ΔP), entre la valeur de consigne de paramètre (P_{Soll}) et une valeur de référence (P_{ref}), à la valeur réelle de paramètre déterminée (P_{Ist}) en tant que valeur de décalage.

5. Procédé selon l'une des revendications précédentes 1 à 3, dans lequel la valeur réelle de paramètre déterminée (P_{Ist}) est ajustée en la multipliant par un facteur de correction (KF) qui est déterminé en fonction de l'écart (ΔP) entre la valeur de consigne de paramètre (P_{Soll}) et la valeur de référence (P_{ref}) .

6. Procédé selon l'une des revendications précédentes 1 à 5, dans lequel la tension de soudage (U) et le courant de soudage (I) sont mesurés au moyen de capteurs prévus sur le chalumeau de soudage (11) ou d'une source de courant de soudage (12) reliée au chalumeau de soudage (11).

7. Dispositif pour fournir un signal de distance référencé (d) correspondant à la distance entre une pointe de contact (KS) d'un chalumeau de soudage (11) et une pièce à usiner (W), comportant :
- une unité de réglage (2) pour régler un point de fonctionnement (AP) sur une courbe caractéristique de soudage stockée (SKL) qui est définie au moins par une vitesse d'avance de fil (V_{D}), une tension de soudage (U) et/ou un courant de soudage (I), et pour régler une distance CTWD entre la pointe de contact (KS) du chalumeau de soudage (11) et la pièce à usiner (W) ;
- une unité de détermination de valeur de consigne (3) pour déterminer une valeur de consigne de paramètre (P_{Soll}) d'un paramètre (P) dépendant de la distance CTWD pour le point de fonctionnement réglé (AP) sur la courbe caractéristique de soudage (SKL) ;
- une unité de détermination de valeur réelle (6) pour déterminer une valeur réelle de paramètre (P_{Ist}) du paramètre (P) dépendant de la distance CTWD, l'unité de détermination de valeur réelle (3) présentant des capteurs qui sont conçus pour mesurer au moins la vitesse d'avance de fil (V_{D}), la tension de soudage (U) et/ou le courant de soudage (I) ;
- une unité d'ajustement (7) pour ajuster automatiquement la valeur réelle de paramètre déterminée (P_{Ist}) en fonction d'un écart calculé (ΔP) entre la valeur de consigne de paramètre déterminée (P_{Soll}) et une valeur de référence prédéfinie (P_{ref}) du paramètre (P) qui se situe au milieu d'une plage de valeurs de sortie du signal de distance référencé (d) ; et comportant
- une interface de sortie pour délivrer un signal de distance référencé (d) correspondant à la valeur réelle de paramètre (P_{Ist}) ajustée par l'unité d'ajustement (7), l'interface de sortie étant prévue pour transmettre le signal de distance référencé (d) en tant que signal de suivi de ligne de soudure à une unité de commande de robot (8) qui est conçue pour commander une position du chalumeau de soudage (11) couplé à un bras de robot (9) pendant le processus de soudage en fonction du signal de suivi de ligne de soudure reçu, la position du chalumeau de soudage (11) pouvant être ajustée au moyen du bras de robot (9) de telle sorte que la valeur de sortie du signal de distance référencé (d) passe à la valeur de référence prédéfinie (P_{ref}) afin de maintenir une distance CTWD souhaitée.

8. Dispositif selon la revendication 7,
dans lequel l'unité d'ajustement (7) ajuste la valeur réelle de paramètre déterminée (P_{Ist}) en additionnant l'écart calculé (ΔP) entre la valeur de consigne de paramètre (Psoii) déterminée par l'unité de détermination de valeur de consigne (3) et la valeur de référence prédéfinie (P_{ref}) à la valeur réelle de paramètre (P_{Ist}) déterminée par l'unité de détermination de valeur réelle (6) en tant que valeur de décalage.

9. Dispositif selon la revendication 7,
dans lequel l'unité d'ajustement (7) ajuste la valeur réelle de paramètre déterminée (P_{Ist}) en multipliant la valeur réelle de paramètre (P_{Ist}) par un facteur de correction (KF) qui est déterminé en fonction de l'écart calculé (ΔP) entre la valeur de consigne de paramètre (P_{Soll}) déterminée par l'unité de détermination de valeur de consigne (3) et la valeur de référence prédéfinie (P_{ref}).

10. Dispositif selon l'une des revendications 7 à 9, comprenant un chalumeau de soudage (11) et/ou une source de courant de soudage (12) reliée au chalumeau de soudage (11), dans lequel les capteurs sont prévus sur le chalumeau de soudage (11) et/ou une source de courant de soudage (12) reliée au chalumeau de soudage (11).

11. Appareil de soudage (SG) avec un bras de robot (9), avec un chalumeau de soudage (11), avec un dispositif (1) selon l'une des revendications 7 à 10 et avec une unité de commande de robot (8) reliée à l'appareil de soudage (SG), qui est conçue pour commander une position du chalumeau de soudage (11) pendant le processus de soudage en fonction d'un signal de distance référencé (d) qui est fourni par le dispositif (1) selon l'une des revendications 7 à 10, dans lequel le chalumeau de soudage (11) est déplaçable par le bras de robot (9), dont la position par rapport à la pièce à usiner (W) est régulée automatiquement par l'unité de commande de robot (8) en fonction du signal de distance référencé (d).
